# EUROPEAN PATENT APPLICATION

(11) **EP 4 737 383 A1**
(43) Date of publication of application: **06.05.2026**
(21) Application number: 24210563.3
(22) Date of filing: 04.11.2024
(51) Int. Cl.: B66F 11/04, E04G 1/22, E21B 19/15, F16L 1/024, F16L 1/06, E04G 1/24

(54) **APPARATUS FOR INSTALLING CONSTRUCTION MATERIALS**

(71) Applicant: West Siphonics Systems Limited, Newmilns Scotland KA16 9BP (GB)
(72) Inventor: MCCORMICK, Zac, Rotherham S60 4JN (GB)
(74) Representative: Atkinson & Company Intellectual Property Limited

(57) **Abstract**

An apparatus **(201)** for installing construction materials **(107),** such as pipework, in a substantially vertical orientation is disclosed. The apparatus comprises an elongate mounting post **(202)** configured to be attached to a mobile elevated work platform **(101)** and a head bracket **(203)** configured to support the construction material. The head bracket is attached to the elongate mounting post and comprises a rotating mechanism **(206)** configured to rotate the head bracket from a first position, in which the construction material is held in a substantially horizontal position for loading and a second position, in which the construction material is held in a substantially vertical position for installation. A locking pin **(405)** is configured to lock the head bracket into the first position or the second position.

## Description

### CROSS REFERENCE TO RELATED APPLICATIONS

This is the first application for a patent directed towards the invention and the subject matter.

### TECHNICAL FIELD

The present invention relates to an apparatus for installing construction materials, such as pipework, in a substantially vertical orientation, and a mobile elevated working platform comprising such an apparatus.

### BACKGROUND OF THE INVENTION

Mobile elevated working platforms (MEWPs) are commonly used to allow operatives to access required areas in construction and warehouse environments. Suitable MEWPs include cherry pickers and scissor lifts, which typically comprise a powered machine and a platform, usually a basket in which an operative stands. The MEWP is configured to be moved to different heights or areas by means of the powered machine.

When using MEWPs, it is often necessary to include material handling equipment thereby allowing operatives to transport or place building or working materials to the required area on the worksite.

In the field of siphonic drainage systems, MEWPs are used to allow operatives to fit drainage pipes at both horizontal and vertical angles within a siphonic drainage system. Material handling equipment is sometimes provided for mounting materials horizontally, and this provides a support mounted within the basket of the MEWP.

In contrast, when fixing drainage pipes or other materials in a substantially vertical orientation, an operative may fix a drainage pipe for fitting to the side of the basket of the MEWP, usually using a temporary strap or rope to hold the pipe in place. This arrangement means that pipes of lengths of over one metre are raised using the MEWP with a makeshift temporary strap. Consequently, the pipes are not always completely secure and move around.

In particular, when raising pipes at height, the pipe pulls on the basket due to wind resistance on the basket and the trailing pipe.

There remains a need for a safer system and appropriate material handling equipment that assists the operative in fitting materials and securely attaches any supported materials without unnecessary additional risk.

### BRIEF SUMMARY OF THE INVENTION

According to a first aspect of the present invention, there is provided an apparatus for installing construction materials, such as pipework, in a substantially vertical orientation, comprising: an elongate mounting post configured to be attached to a mobile elevated work platform; and a head bracket configured to support said construction material; wherein said head bracket is attached to said elongate mounting post and comprises a rotating mechanism configured to rotate said head bracket from a first position, in which said construction material is held in a substantially horizontal position for loading and a second position, in which said construction material is held in a substantially vertical position for installation; and said apparatus further comprising a locking pin configured to lock said head bracket into said first position or said second position.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art. Components and processes distinguished by ordinal phrases such as "first" and "second" do not necessarily define an order or ranking of any sort.

### BRIEF DESCRIPTION OF THE SEVERAL VIEWS OF THE DRAWINGS

Figure 1 shows an operative in a mobile elevated work platform handling pipework;
Figure 2 shows an apparatus for installing construction materials;
Figure 3 shows a side view of the apparatus of Figure 2;
Figure 4 shows a rotating mechanism of the apparatus of Figures 2 and 3 in isolation;
Figure 5 shows a securing mechanism for securing the rotating mechanism to the elongate mounting post;
Figure 6 shows the apparatus for installing construction materials fitted to a basket of a mobile elevated work platform in a storage position;
Figure 7 shows the apparatus for installing construction materials in a first, loading, position;
Figure 8 shows a schematic view of the apparatus in a loading position including a pipe;
Figure 9 shows the apparatus for installing construction materials raising a pipe; and
Figure 10 shows a schematic view of the apparatus in a second, installation, position including a pipe.

### DETAILED DESCRIPTION OF EMBODIMENTS OF THE INVENTION

### Figure 1

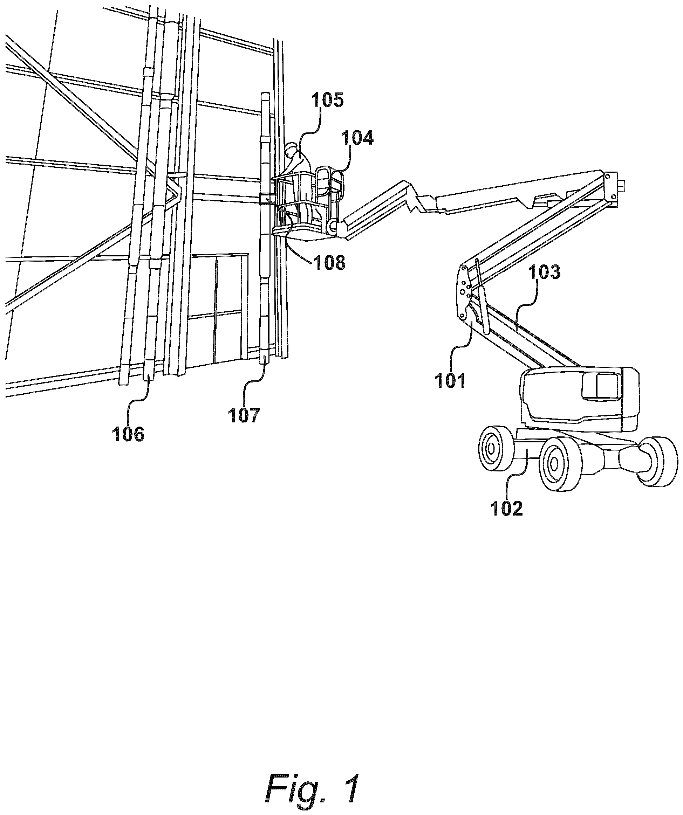

A typical scenario in which an operative utilises a mobile elevated working platform (MEWP) to install a construction material is shown in Figure 1.

Mobile elevated work platform **101** is shown in this embodiment in the form of a cherry picker. Cherry picker **101** comprises a machine **102** and a boom **103** attached to a basket **104** which is configured to support an operative **105** during installation procedures.

In the embodiment, operative **105** is tasked with installing pipework **106** which, for example, may form part of a siphonic drainage system. As shown, pipe 107 is ready to be fitted as part of the drainage system and is attached to basket **104** by means of an apparatus **108.**

In conventional systems, pipe **107** may be attached by a piece of rope which does not securely attach pipe **107** and which correspondingly can cause safety issues for operative **105** as well as any further operatives in the area who may suffer harm should pipe **107** become unattached from basket **104.**

As noted, the mobile elevated work platform in this embodiment is shown as a cherry picker. It is appreciated however that any other alternative mobile elevated working platform may be utilised such as, for example, a scissor lift including those which are static and those which are dynamic.

In the embodiment shown, operative **105** is shown handling construction material in the form of a pipe **108.** It is further appreciated that, the construction material utilised with apparatus **108** may be any suitable construction material conventionally used with a mobile elevated work platform and may comprise drainage pipework; siphonic pipework; ducting; cable trays; sprinkler bends or any other construction material mounted in a substantially similar manner.

### Figure 2

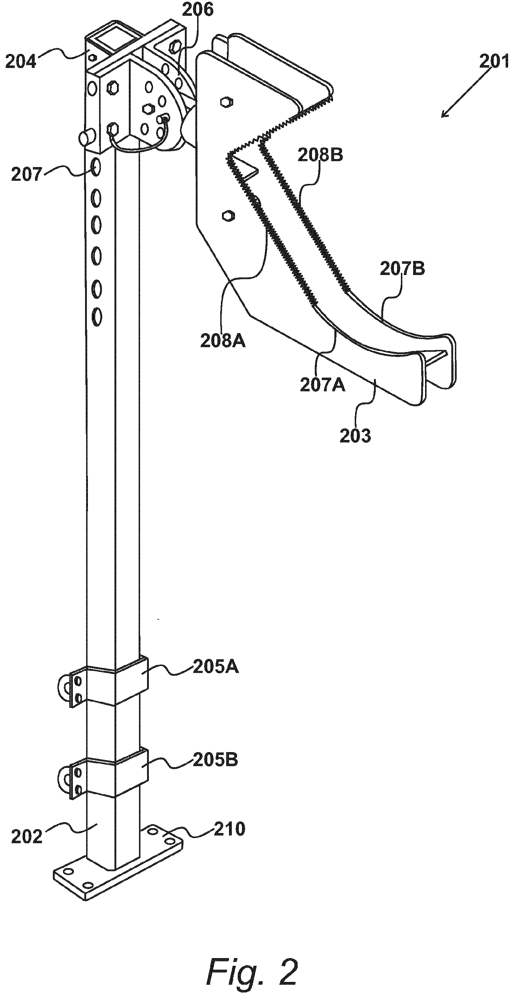

An example apparatus for installing construction materials in accordance with the present invention is shown in perspective view in Figure 2. It is appreciated that the apparatus which will now be described is suitable for use in the scenario described in Figure 1 and may be utilised for installing pipe **107** by means of a mobile elevated work platform **101** in a substantially similar manner to that described previously.

Apparatus **201** comprises an elongate mounting post **202** and a head bracket **203.** Head bracket **203** is attached to elongate mounting post **202** by means of an attachment mechanism **204.**

Attachment brackets **205** are provided on elongate mounting post **202** such that elongate mounting post **202** is configured to be attached to a mobile elevated work platform such as those described previously.

In the embodiment, head bracket **203** comprises a rotating mechanism **206** which is configured to rotate head bracket **203.** In an embodiment, rotating mechanism **206** is rotatable up to six degrees of freedom, that is, the rotating mechanism may be configured to allow head bracket **203** to surge, sway, heave, roll, pitch or yaw.

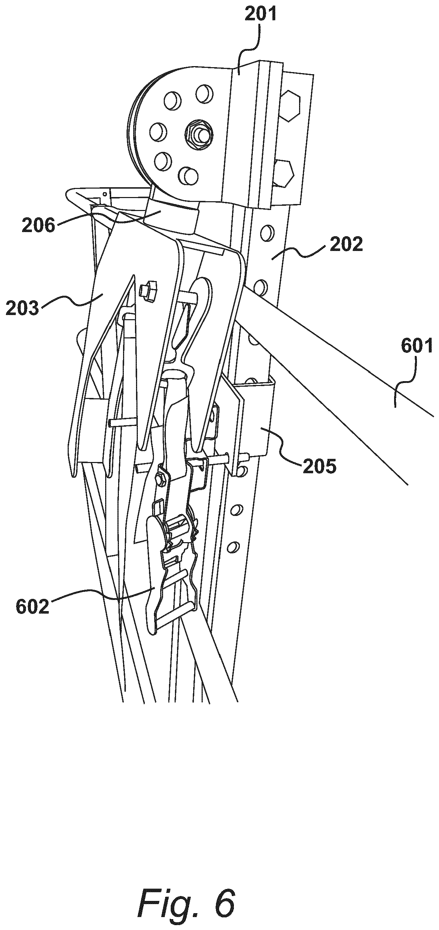

In a specific embodiment, head bracket **203** is permitted to move by rotating mechanism **206** by means of roll rotation (pivoting side to side) and pitch rotation (tilting forwards and backwards). As will be shown further with respect to Figures 6 to 10 this enables head bracket **203** to move from a loading position to an installing position and is further able to move to a storage position for when apparatus **201** is no longer in use.

In the embodiment, head bracket **203** is comprised of a substantially metallic material. In an embodiment, the metallic material comprises mild steel and, in an alternative embodiment, head bracket **203** comprises aluminium. It is appreciated that any other suitable metallic material may be utilised, examples of which include titanium.

In the embodiment, head bracket **203** comprises a pair of jaws **207.** In the embodiment, each jaw comprises a serrated edge **208.** This provides additional friction such that any pipe or construction material is more securely retained within the jaws of the head bracket in use.

In the embodiment, elongate mounting post **202** comprises a substantially similar metallic material to that of head bracket **203.** Thus, elongate mounting post **202** comprises mild steel or aluminium but may comprise any further suitable material as necessary. In alternative embodiments, head bracket **203** and elongate mounting post **202** comprise different metallic materials. In a further embodiment, it is appreciated that the whole of apparatus **201** comprises a substantially similar metallic material, and this may be any suitable material including aluminium or mild steel, for example.

It is noted that the choice of materials however should be maintained as light as possible given that these will add to the weight of the load within the basket of the mobile elevated work platform.

Elongate mounting post **202** comprises a plurality of holes 209 which are configured to receive rotating mechanism **206.** Plurality of holes **209** permit the mounting of rotating mechanism **206** to be at variable heights depending on working requirements, such as, for example, the length of construction material being used or the size of the basket in the mobile elevated work platform.

In the embodiment, elongate mounting post **202** comprises a substantially square shaped cross-section. This enables alignment and a secure fit against a corresponding flat surface on the basket of the mobile elevated work platform. It is appreciated however that alternative cross sections may be utilised for elongate mounting post **202.** Thus, in alternative embodiments, the cross-sectional area of elongate mounting post **202** may be substantially rectangular shaped or substantially circular shaped.

Apparatus **201** further comprises a base support plate **210** positioned at an end of elongate mounting post **202.** This can assist in providing support to the apparatus when fitting the apparatus to an elevated work platform.

### Figure 3

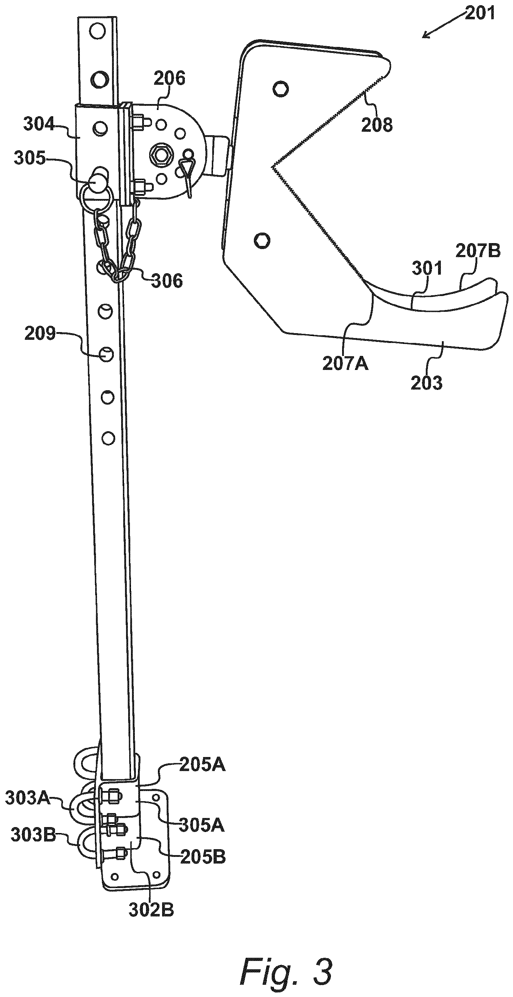

An alternative side view of apparatus **201** is shown in Figure 3.

In the embodiment, head bracket **203** comprises a substantially u-shaped receiving portion **301** which is configured to receive construction material for installation. In the embodiment, head bracket **203** is formed from a laser cutting process, which enables the shape of the receiving portion of the head bracket **203** to be cut accurately.

The shape as illustrated is consistent with use with siphonic pipework however, it is appreciated that in alternative embodiments when alternative construction materials are utilised, the shape of the receiving portion of head bracket **203** may be any further suitable shape to ensure adequate support of the construction material in question.

The substantially u-shaped receiving portion **301** again comprises a pair of jaws **207** comprising a serrated edge **208.** This adds further to the support of the construction material in question.

In the embodiment, attachment brackets **205** comprise a support portion **302** and a looped portion **303.** Support portion **302** is fitted to elongate mounting post **202** while, in use, looped portion **303** is configured to be attached to a tube forming part of the basket of the mobile elevated work platform.

In this illustrated embodiment, looped portion **303** extends away from the elongate mounting post in a substantially opposite direction to head bracket **203,** however, it is appreciated that each attachment bracket **205** could be mounted in a different direction depending on requirements of the elevated work platform. For example, looped portion **303** may be configured to extend perpendicularly to that shown in Figure 3 to assist in attaching to the elevated work platform if necessary. Alternatively, the loop portion may extend away from the elongate mounting post in a substantially similar direction to head bracket **203.**

In the embodiment, attachment brackets **205** are configured to be attachable to alternative various forms of elevated work platform. In particular, the attachment brackets can be utilised with elevated work platforms comprising brackets with either square cross-sectional tubing or round cross-sectional tubing.

In this illustrated embodiment, apparatus **201** comprises two attachment brackets **205,** however, it is appreciated that in alternative embodiments one attachment bracket may be utilised or a further plurality of attachment brackets may be utilised depending on the particular platform used and its corresponding size.

In the embodiment, apparatus **201** further comprises a securing mechanism **304.** Securing mechanism **304** is configured to secure rotating mechanism **206** to elongate mounting post **202.** Securing mechanism **304** comprises a locking pin **305** which is configured to co-operate with any one of the plurality of holes **209** along elongate mounting post **202.** This allows for the height of rotating mechanism and head bracket to be securely adjusted and held in place at the most appropriate height or position. In the embodiment, locking pin **305** comprises a safety chain **306** which ensures locking pin **305** is not displaced. This can be particularly advantageous if adjustment is made when working at height.

### Figure 4

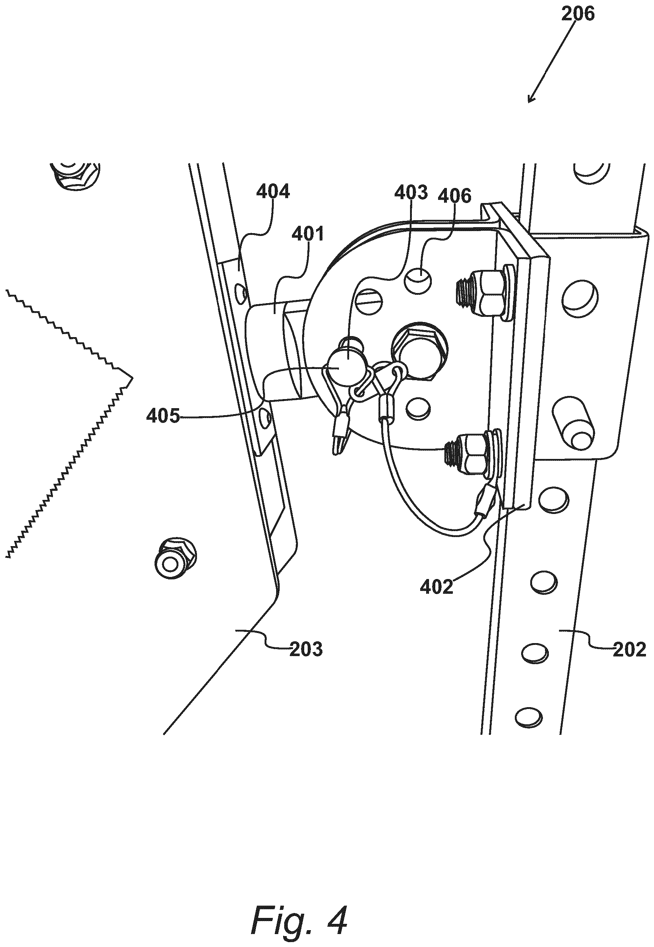

Rotating mechanism **206** of apparatus **201** is shown in Figure 4. Rotating mechanism **206** comprises a rotating portion **401,** connecting portion **402** and locking mechanism **403.**

In the embodiment, rotating portion **401** is configured to rotate with up to six degrees of freedom. At a first end **404** rotating portion **401** is attached to head bracket **203.** This allows head bracket **203** to be rotatable by means of rotating mechanism **206.**

At the opposite end of rotating portion **401** is locking mechanism **403.** Locking mechanism **403** comprises a locking pin **405** which is configured to lock head bracket **203** into a desired position and is utilised to prevent rotating portion **401** from moving when in use. Thus, the locking mechanism can secure the head bracket into a first position in which a construction material is held in a substantially horizontal position, or into a second position in which a construction material is held in a substantially vertical position for installation. This also ensures that any construction materials do not move around while the mobile elevated work platform is raised and further ensures that once the construction material is in a desired position, it can be removed safely by the operative.

Locking mechanism **403** is supported by connecting portion **402** which is suitably attached to elongate mounting post **202.**

In the embodiment, rotating mechanism is mechanically and manually operated by means of the locking pin **405.** Thus, when rotation of head bracket **203** is required, locking pin **405** can be removed from any one of the plurality of holes **406** of locking mechanism **403** and returned to one of the plurality of holes **406** to secure the head bracket **203** in place.

Alternative mechanical methods of locking mechanisms have been utilised such as lever mechanisms, however, the inventors have determined that these are unsuitable in the application of elevated work platforms as they slip at height and can consequently be dangerous.

However, it is appreciated that, in alternative embodiments the rotating mechanism comprises a motor configured to power and operate the rotating mechanism such that an operative may activate rotating mechanism by means of a control device. Such a control device may be configured in line with the operations of the mobile elevated work platform thereby reducing the need for an operative to be working outside the basket of the mobile elevated work platform.

### Figure 5

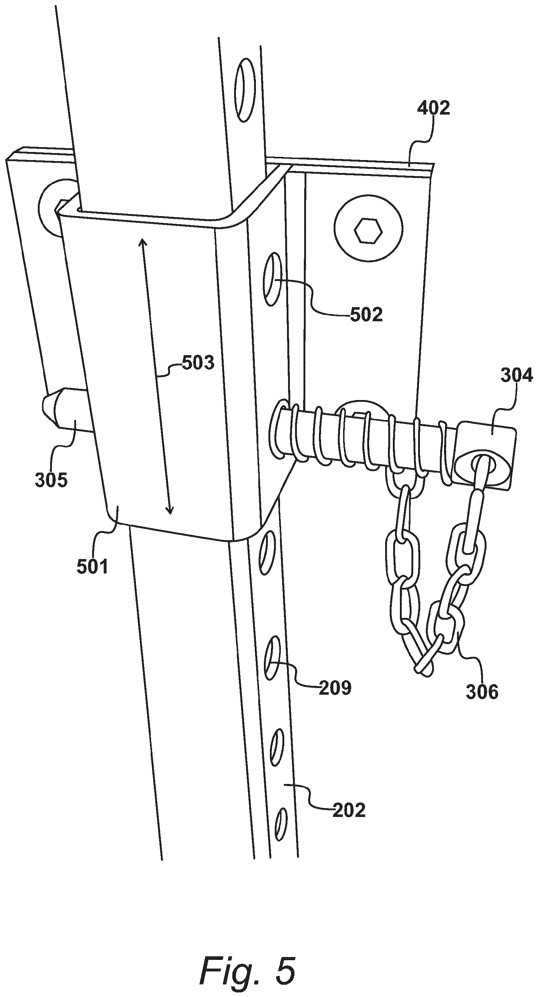

A further view of the securing mechanism **304** for securing rotating mechanism **206** to elongate mounting post **202** is shown in Figure 5.

In the embodiment, securing mechanism **304** comprises a securing bracket **501** which is attached to connecting portion **402** of the locking mechanism **403.** Securing bracket **501** is configured to fit around and slide along elongate mounting post **202.** Securing bracket **501** further comprises a plurality of apertures **502** configured to receive locking pin **305.** The plurality of holes **209** in elongate mounting post **202** are further configured to receive locking pin **305.**

Figure 5 shows the securing mechanism **304** in a locked position in which the head bracket is secured by means of the securing mechanism **304** at a given height to elongate mounting post **202.** When the height of head bracket **203** needs to be adjusted, an operative can remove locking pin **305** which allows securing bracket **501** to move along elongate mounting post **202** in the direction of arrow **503.** Once a desired height has been achieved, locking pin **305** can be inserted into an aperture **502** and one of the plurality of holes **209** to secure in position.

When removing locking pin **304,** safety chain **306** ensures locking pin **305** is retained in close proximity as the operative focuses on positioning the securing bracket **501** at the most appropriate height and position. This therefore further allows an operative to focus on the adjustment rather than concerning themselves about keeping hold of the locking pin.

### Figure 6

Apparatus **201** is shown in Figure 6 fitted to a basket **601** of a mobile elevated work platform **101.**

In the embodiment, apparatus **201** is shown in a storage position which is suitable for when the mobile elevated work platform is being utilised for alternative construction scenarios that do not require construction materials to be mounted in a substantially vertical orientation.

In the embodiment therefore, rotating mechanism **206** holds head bracket **203** in a position in which it is aligned against elongate mounting post **202.** In this embodiment, elongate mounting post **202** is fixed to basket **601** by means of attachment bracket **205.**

In the illustrated embodiment, it is appreciated that apparatus **201** has been fixed to the inside working area of basket **601.** In alternative embodiments, it is possible that apparatus **201** may be fitted externally to basket **601** should a requirement be needed for increased working space within basket **601** or, for example, should head bracket **203** be required to be closer to the installation area.

In the embodiment, head bracket **203** and, consequently, apparatus **201** is provided with a strap **602** for securing any construction material within head bracket **203.** In the embodiment, strap **602** comprises a ratchet strap which can be effectively tightened around the construction material when mobile elevated work platform is being raised and/or lowered.

It is appreciated that alternative securing mechanisms may be utilised to secure construction material within head bracket **203** and, this may further include a metal support or bracket which is configured to lock into place around head bracket **203.**

### Figure 7

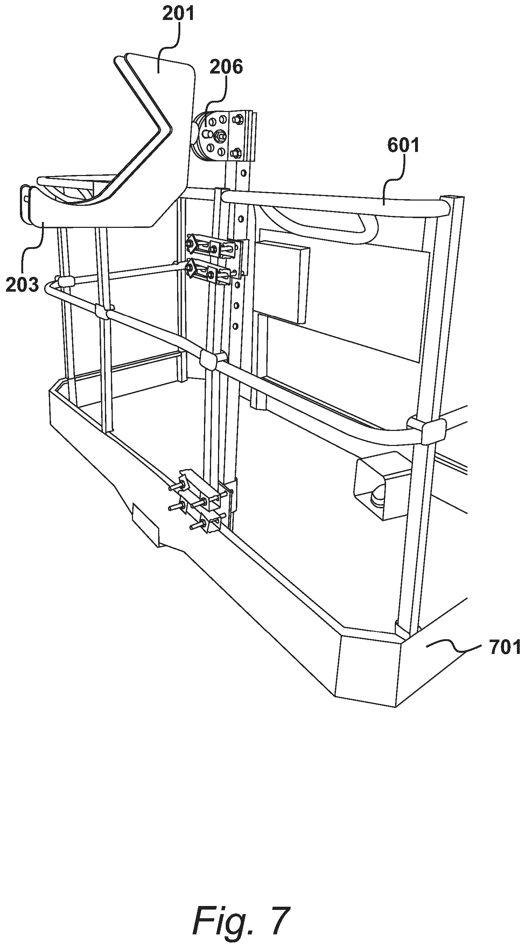

Apparatus **201** is shown as part of mobile elevated work platform **701** and attached to basket **601** in Figure 7 in a first, loading, position. In this position, construction material is intended to be held within head bracket **203** and supported in a substantially horizontal position for loading. Thus, in this orientation, an operative may load a construction material while at ground level before raising basket **601** such that the construction material can be mounted in a substantially vertical orientation.

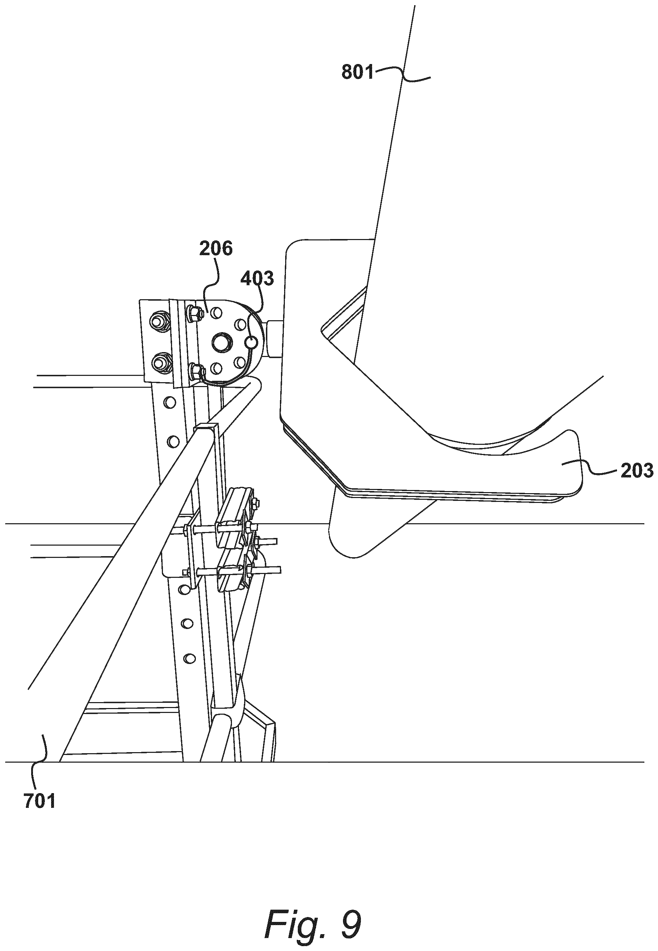

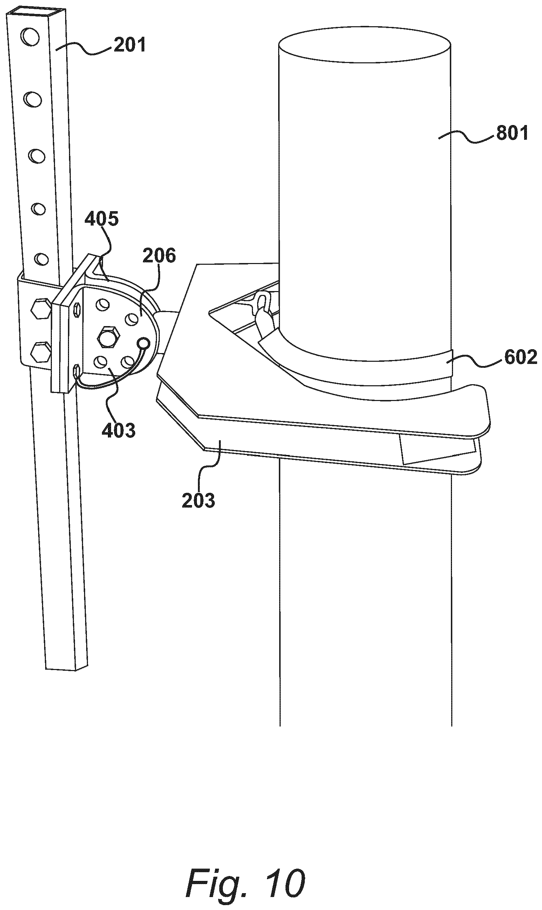

Thus, rotating mechanism **206** is configured to rotate head bracket **203** from the position shown in Figure 7 to that shown in Figure 9 and subsequently Figure 10.

### Figure 8

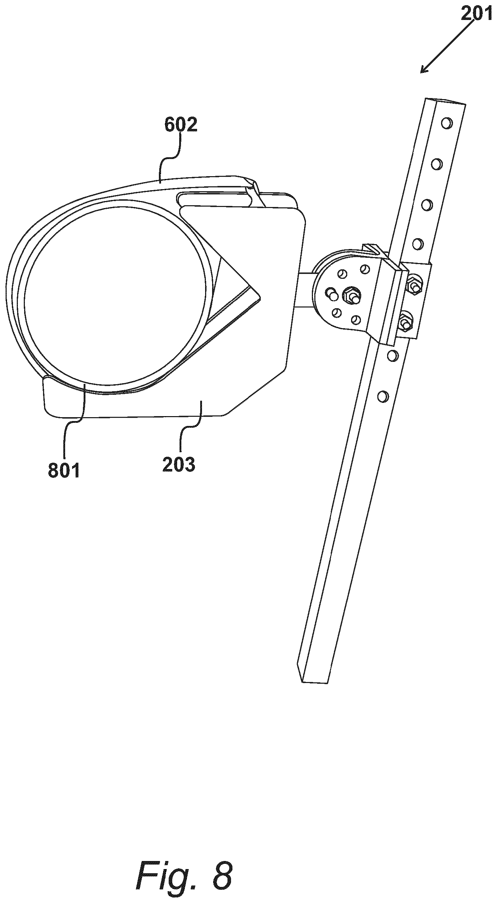

A schematic view of apparatus **201** shown in the first, loading, position previously shown in Figure 7 is shown in Figure 8. In the embodiment, pipe **801** is secured in head bracket **203** by means of strap **602.** In this embodiment therefore, pipe **801** is in a substantially horizontal position relative to the ground.

Typically, an operative positions pipe **801** within head bracket **203** in an offset orientation. For example, for a pipe having a length of six metres (6m), the pipe may extend in one direction from head bracket **203** by around one metre (1m) and, extend in the opposite direction by around five metres (5m). This ensures that once the mobile elevated work platform is raised, pipe **801** orientates into a substantially vertical position and is suitable for installation while minimising the physical efforts of the operative in manoeuvring pipe **801.**

### Figure 9

Once secured by means of strap **602,** pipe **801** may be rotated by raising mobile elevated work platform **701** in a conventional manner. In this way, pipe **801** rotates along with head bracket **203** due to rotating mechanism **206.** It is appreciated that locking mechanism **403** is arranged to permit movement at this point.

In this way, pipe **801,** or an alternative construction material, rotates on raising of mobile elevated work platform **701** and is moved from a substantially horizontal position, such as that previously shown in Figure 8 towards a substantially vertical position which will be shown in Figure 10.

### Figure 10

Pipe **801** is shown in Figure 10 in a schematic view with apparatus **201** in a second, installation, position in which pipe **801** is held in a substantially vertical position. In this way, head bracket **203** has rotated by means of rotating mechanism **206** to bring pipe **801** in a corresponding horizontal vertical position.

Assuming that pipe **801** is in a correct position for installation, such as aligned with any required connecting pipes of the drainage system, an operative may activate locking pin **405** of locking mechanism **403** to ensure that head bracket **203** does not further rotate pipe **801.**

At this point, pipe **801** can then be removed by detaching strap **602** once pipe **801** is successfully installed. The mobile elevated work platform can then be moved in a conventional manner such that head bracket **203** is removed from pipe **801.**

The process and attachment mechanism provides a safer and more effective way of material handling in construction environments and ensures that operatives are not utilising makeshift arrangements, particularly in the case of large construction materials which, if they become detached from a mobile elevated work platform can lead to serious injury or fatalities.

## Claims

1. Apparatus **(201)** for installing construction materials (**107**), such as pipework, in a substantially vertical orientation, comprising:
an elongate mounting post (**202**) configured to be attached to a mobile elevated work platform (**101**); and
a head bracket (**203**) configured to support said construction material; wherein
said head bracket is attached to said elongate mounting post and comprises a rotating mechanism (**206**) configured to rotate said head bracket from a first position, in which said construction material is held in a substantially horizontal position for loading and a second position, in which said construction material is held in a substantially vertical position for installation; and
said apparatus further comprising a locking pin (**405**) configured to lock said head bracket into said first position or said second position.

2. The apparatus of claim 1, wherein said elongate mounting post comprises a plurality of holes (**209**) configured to receive said rotating mechanism to enable height adjustment of said head bracket.

3. The apparatus of claim 1 or claim 2, further comprising a securing mechanism (**304**) configured to secure said rotating mechanism to said elongate mounting post.

4. The apparatus of claim 3, wherein said securing mechanism comprises a second locking pin (**305**) configured to co-operate with each said plurality of holes.

5. The apparatus of claim 4, wherein said second locking pin comprises a safety chain (**306**).

6. The apparatus of any preceding claim, wherein said construction material is any one of the following:
drainage pipework; siphonic pipework; ducting; cable trays; sprinkler bends.

7. The apparatus of any preceding claim, wherein said rotating mechanism is rotatable up to six degrees of freedom.

8. The apparatus of any preceding claim, further comprising a strap (**602**) for securing said construction material in said head bracket.

9. The apparatus of any preceding claim, wherein said rotating mechanism is configured to move said head bracket into a storage position in which said head bracket is aligned against said elongate mounting post.

10. The apparatus of any preceding claim, wherein said head bracket comprises a pair of jaws (**207**) configured to receive said construction material.

11. The apparatus of claim 10, wherein each said pair of jaws comprises a serrated edge (**208**).

12. The apparatus of any preceding claim, further comprising at least one attachment bracket (**205**) configured to connect said apparatus to a mobile elevated work platform.

13. The apparatus of any preceding claim, comprising a base support plate (**210**) at an end of said elongate mounting post.

14. The apparatus of any preceding claim, wherein said apparatus is comprised of a substantially metallic material, comprising at least one of the following:
mild steel; aluminium; titanium.

15. A mobile elevated working platform (**101**) comprising the apparatus of any one of claims 1 to 14.
